# EUROPEAN PATENT APPLICATION

(11) **EP 2 028 588 A2**
(43) Date of publication of application: **25.02.2009**
(21) Application number: 08162583.2
(22) Date of filing: 19.08.2008
(51) Int. Cl.: G06F 3/12, H04L 29/06

(54) **Method and apparatus for forwarding media objects to a cellular telephone user**

(30) Priority: 19.08.2007 IL 18535407; 03.09.2007 IL 18566407
(71) Applicant: xSights Media Ltd., 42505 Netania (IL)
(72) Inventor: Dariel, Eran, 44935 Sde Warburg (IL)
(74) Representative: Modiano, Micaela Nadia

(57) **Abstract**

A method and apparatus are provided for providing one or more media objects associated with a printed document to a user of a mobile communication device. The method comprises the steps of: providing an electronic file comprising a digital representation of a printed document, wherein the printed document comprises a plurality of printed portions and plurality of printed objects associated with at least some of the printed portions; providing data related to a direct and/or indirect association of the plurality of portions with respective printed objects; associating a plurality of media objects with the plurality of printed objects; receiving a captured image representing at least one part of a portion of the printed document, wherein that portion belongs to the plurality of printed portions; processing the captured image; identifying one or more portions of the printed document whose image has been captured and deriving therefrom the respective associated one or more printed objects; and communicating at least one media object associated with the identified one or more printed objects to the user of the mobile communication device.

## Description

### Field of the Invention

The present invention relates in general to the field of communications, and in particular to the interaction of a mobile device and a database for the retrieval of information.

### Background of the Invention

A rapidly increasing number of devices exist today for accepting user input and controlling user interaction with desktop and portable computers, personal digital assistance (PDAs), mobile phones, and other types of electronic devices. For example, a keyboard may be used to accept typed input and other types of commands, a mouse or a track-ball may be used to provide relative motion input as well as various types of point-and-click selections, a keypad can be used to provide input of numerical data and functional commands, navigational keys can be used for scrolling lists or otherwise repositioning a cursor, and various types of touch-pads or touch-screens can be used to provide absolute positional coordinate inputs. Each type of mechanism for accepting input and for supporting user interaction has its own benefits and disadvantages in terms of size, convenience, flexibility, responsiveness, and easy of use. Typically, the selection of a particular type of input mechanism is dependent upon the function of the application and the type of interaction required.

With the ever expanding capabilities and availability of applications both on the Internet and the area of wireless technology, there continues to be a need to develop and provide new mechanisms adapted to accept input and allow interacting with users. By expanding the range of mechanisms for supporting user interaction, application developers and end-users can have greater flexibility in the selection of input devices.

The underlying principle of any such new mechanisms is to provide increased flexibility and maximize user convenience. For example, while a keyboard typically provides a great deal of flexibility, particularly when used in connection with a mouse, a touch-screen, or other navigational device, its size makes it inconvenient in many cases, especially in the wireless world.

US 7,196,825 describes an electronic input/output device which comprises an electronic pen adapted to load applications from an application server, receive grid requests and action requests through the electronic pen. Then contacting an appropriate entity within the system to properly respond to the request from the electronic pen then store the application and any corresponding data received from the electronic pen to facilitate the processing and use of the application.

W0 06/137613 discloses the use of a mobile phone camera which generates an image data input, which is then converted to character code automatically through a character recognition, then the converted character recognition links with built-in electronic dictionary searches the inputted word in any language to choose, the result is displayed on the screen of the mobile camera, and the corresponding words are outputted by voice through speaker of the mobile phone.

US 2001033293 teaches a method and system for displaying feedback in an electronic reading device system. An electronic reading device is used to detect portions of an address pattern on a formatted surface. The detected portions are converted into feedback that is then displayed on an electronic display device. The feedback can include a textual representation of information written with the electronic reading device, help information for an application associated with the address pattern, or a retrieval of other stored information.

US 20060085477 describes a method of retrieving electronic documents by receiving images captured by using an image capturing device, extracting contents of the image. Then forming a search query based upon the extracted contents and searching a plurality of electronic documents to identify a first electronic document that satisfies the search query.

US 2005234851 relates to methods for quickly and easily getting information about, or included in, a printed document into a public or private digital page by scanning a printed document, receiving the scan information from the scanner, accessing a database of digital documents and locating a digital document that corresponds to the printed document. Then, either the digital content is sent or a hyperlink to the digital content at a predetermined web page.

US 2006079294 discloses a mobile device that comprises a sensor configured to capture an image of an object, a keypad configured to receive a user command to select a category of information related to the object, such as an image, a video, an audio file, and/or text. The image and the user command are transmitted to a communication system and titles of information within the category of information are received from the communication system. The received titles are then displayed at the mobile device.

### Summary of the Invention

It is an object of the present invention to provide devices and methods to allow receiving electronic information by the use of a mobile communication device, and particularly media objects and the like, based upon an image captured of a printed document.

It is another object of the present invention to provide a solution that does not require the use of high quality image capturing device, and can be carried out also by using a low quality device, such as low resolution cameras, with or without auto-focus integrated in cellular telephones.

It is another object of the present invention to provide a method and a device for identifying an image of a printed object under challenging environmental conditions such as low and/or inconsistent illumination, and/or curved surface, and/or unsteady hand.

It is yet another object of the present invention to provide a method and a device for identifying a printed object (e.g. a link) in a captured image based on identifying the vicinity/location at which a printed portion of a printed document, which image has been captured, is located within that printed document.

It is still another object of the present invention to provide a method and a device for identifying an image even if only a portion of the printed object is included in the captured image.

It is yet another object of the present invention to provide a method and a device wherein Optical Character Recognition ("OCR") does not constitute an essential part (although this is can be an additional option), but rely for the required recognition on visual content comprised in the captured query image sent.

It is still another object of the present invention to identify, out of plurality printed objects captured in an image, which specific printed object is the focus of the user and to provide the user with related media object(s) linked to the specific printed object.

Other objects of the invention will become apparent as the description of the invention proceeds.

According to a first embodiment of the present invention there is provided a method for providing one or more media objects associated with a printed document to a user of a mobile communication device, the method comprising the steps of:
providing an electronic file comprising one or more digital representations of a printed document, wherein the printed document comprises a plurality of printed portions and plurality of printed objects associated with at least some of the printed portions;
providing data related to a direct and/or indirect association of the plurality of printed portions with respective printed objects out of the plurality of printed objects;
associating a plurality of media objects with the plurality of printed objects;
receiving a captured image representing at least one part of a printed portion of the printed document, wherein that printed portion belongs to the plurality of printed portions;
processing the captured image;
identifying one or more printed portions whose image has been captured (at least partially), and deriving therefrom the respective associated one or more printed objects;
communicating at least one media object associated with the identified one or more printed objects to the user of the mobile communication device.

In accordance with another preferred embodiment of the invention, determining the part (i.e. portion) of the one or more digital representation of the printed document that is included in the captured image, is based on any one or more of the following parameters: features matching between the captured image and the printed document , size of the printed object, proximity to other printed objects, relationship (e.g. relative location, relative size, shape, etc.) between printed objects (e.g. between two adjacent printed objects), presence of an image (including advertisement) within a printed object, size of the image within the printed object, relative size and/or location of an image within the printed object, title, relationship between the title and the remaining of the printed object, colors, colors' combination, relationship between colors of printed objects and the like.

Preferably, the capturing of the image is done by using a camera associated with the mobile communication device, so that the user captures with this camera an object out of a printed document. The term "printed document" as used herein through the specification and claims should be understood to encompass a newspaper, a magazine, a periodical, a brochure, a book etc., and the term "printed object" refers to denotes a printed item such as for example a combination of words, a title of an article, an advertisement or a headline in a daily newspaper, and the like, so that by invoking the method of the present invention, the user is able to receive pre-defined video signals associated/linked with the printed object which is associated with the printed portion whose image has been captured.

The term "image" as used herein should be understood to encompass text, a figure, a logo, a symbol and the like, or any combination thereof as the case may be, converted into a digital representation.

Also, it should be understood that since the identification of the printed object is based upon the identification of the surrounding at which it is located (the portion of the printed document), the identification may be carried out directly, if the portion which image has been captured is known to be associated with a certain printed object, or alternatively, indirectly, if for example the image captured is of a portion that is adjacent to the portion associated with the printed object. Preferably, in order to enable such indirect identification, the plurality of portions comprises also portions which do not necessarily comprise any printed object themselves but their links with other portions that do comprise printed objects are provided, so once an image of a portion that does not comprise a printed object is processed, one may identify the printed object comprised in an adjacent portion through the knowledge of the link between the two adjacent portions. Similarly, this process may be extended to non-adjacent portions, through the knowledge of the links between various portions comprised in the printed document.

The term "media object" as used herein should be understood to encompass a unit of image data (optionally accompanied by other media data, e.g. sound), and encompasses individual static images as well as sequences of video images or video frames (such sequences are referred to herein as media objects). Media objects may alternatively or additionally comprise animation data defining animations. The term "animation" as used herein encompasses any form of animation, including, for example, frame-based animation, vector animation or procedural animation. The term "media object" should be considered to encompass also any such animations. The term "image data" preferably refers to image data of static images or of video/animation frames in media objects, or to image data associated with animations.

As will be appreciated by those skilled in the art, the number of the plurality of printed objects does not necessarily have to match the number of media objects (and typically they will not be the same), as to some of the printed objects there may be no media object associated therewith, while to other printed objects there could be one or more media objects associated therewith.

In accordance with the present invention, the association of media objects with the printed objects should be understood to encompass cases where each of the media objects is associated with a single printed object out of the plurality of printed objects, or that each of the media objects is associated with more than one printed object out of the plurality of printed objects, or that a number of the media objects are associated with a single printed object out of the plurality of printed objects, or any combination thereof (e.g. that some of media objects are each associated with a single printed object out of the plurality of printed objects while other media objects are each associated with more than one printed objects out of the plurality of printed objects, etc.)

According to another preferred embodiment of the invention, the printed object which image has been captured comprises at least one identification mark (e.g. underlined word(s), bold written word(s), different color word(s) etc.).

Preferably, the identification mark is used to provide the user (the reader) with easier identification of items within the printed document that have been associated with one or more media objects that the he/she can retrieve by following the way explained herein.

According to another embodiment, the step of identifying one or more printed objects out of the plurality of printed objects further comprises detection of at least one identification mark in the captured image.

In accordance with still another embodiment of the invention, if a captured image is found to comprise more than one printed objects, the media object that will eventually be communicated to the user is the one that is associated with an printed object located closer to the center of the captured image than any of the other printed objects comprised in the captured image.

In the alternative, if a captured image is found to comprise more than one printed objects, a plurality of media objects corresponding to the plurality of printed objects comprised in the captured image will be communicated to the user. Preferably, the first media object that will eventually be communicated to the user is the media object associated with a printed object located closer to the center of the captured image than any of the other printed objects comprised in the captured image.

By yet another preferred embodiment of the invention, the media object is communicated to the user of the mobile communication device by using a communication address associated with that user. Such a communication address may be a cellular telephone number, an e-mail address, a Uniform Resource Identifier ("URI"), a website address and the like.

In accordance with still another embodiment of the invention, the step of identifying the printed object(s) which image has been captured further comprises identifying a folder (e.g. a computer directory) associated with the printed document from among database comprising a plurality of folders each associated with at least one printed document.

According to another aspect of the present invention there is provided an apparatus for providing media object(s) associated with a printed document to a user of a mobile communication device. The apparatus comprises:
- storage means for storing:
   o at least one electronic file comprising one or more digital representations of a printed document, wherein the printed document comprises a plurality of printed objects;
   o information related to direct and/or indirect association of each of a plurality of portions comprised in the printed document, with respective printed objects of the plurality of printed objects; and
   o a plurality of media objects associated with the plurality of printed objects;
- a receiver configured to receive an electronic image, captured by using an image capturing device, wherein the captured image represents at least one part of a portion of the printed document, wherein that portion belongs to the plurality of printed portions comprised in the printed document;
- a processor adapted to operate on the image received and to identify one or more portions of the plurality of printed portions whose image has been captured (at least partially), and to derive therefrom one or more printed objects associated with the identified one or more printed portions; and
- communication means adapted to forward one or more media objects associated with the identified one or more printed objects towards a mobile communication device associated with the user.

According to a preferred embodiment of the invention, the processor is further adapted to determine based on the processed image, which part of the one or more digital representation of the printed document is included in the captured image and preferably to identify the one or more printed objects out of the plurality of printed objects associated with that part of the one or more digital representations.

By another preferred embodiment of the invention, the processor is adapted to determine the part of the one or more digital representation of the printed document included in the captured image, based on any one or more of the following parameters: features matching between the captured image and the printed document, size of the printed object, proximity to other printed objects, relationship between two adjacent printed objects, presence of an image (including advertisement) within a printed object, size of the image within the printed object, relative size and/or location of an image within the printed object, title, relationship between the title and the remaining of the printed object, colors, colors' combination, relationship between colors of printed objects and the like.

According to still another embodiment of this aspect of the invention, the processor is further adapted to retrieve an identification mark comprised in the captured image, and apply the information associated with this identification mark in the identification of said one or more printed objects.

According to still another preferred embodiment, the storage is operative to store a plurality of electronic folders each representing at least one printed document and each of these folders comprises a plurality of media objects (which may optionally comprise electronic text files), associated with a pre-defined plurality of printed objects associated with a corresponding printed document.

According to still another aspect of the present invention there is provided a mobile communication device adapted to enable providing media object(s) associated with a printed document to a user of a mobile communication device. The mobile communication device comprises:
- an image-capturing means for capturing an image of at least one part of a portion of that printed document associated with at least one printed object;
- a processor adapted to operate on the captured image and to provide one or more characterization parameters of the printed object whose at least one part has been captured by the image capturing means;
- transmission means adapted to transmit information (e.g. in the form of SMS etc.) associated with the one or more characterization parameters towards a communication network; and
- reception means adapted to receive one or more media objects associated with the at least one part of the printed object whose image had been captured, wherein the one or more media objects are forwarded to the mobile communication device along a communication network.

According to another preferred embodiment of this aspect of the invention, the processor is adapted to retrieve one or more of the following parameters based on the captured image: features matching between the captured image and the printed document , size of the printed object, proximity to other printed objects, relationship between two adjacent printed objects, presence of an image (including advertisement) within a printed object, size of the image within the printed object, relative size and/or location of an image within the printed object, title, relationship between the title and the remaining of the printed object, colors, colors' combination, relationship between colors of printed objects and the like.

By still another embodiment of this aspect of the invention, the processor is further adapted to retrieve an identification mark comprised in the captured image, and wherein the information provided by the processor comprises information which relates to the identification mark.

### Brief Description of the Drawing

For a more complete understanding of the present invention, reference is made to the following detailed description taken in conjunction with the accompanying drawing wherein:

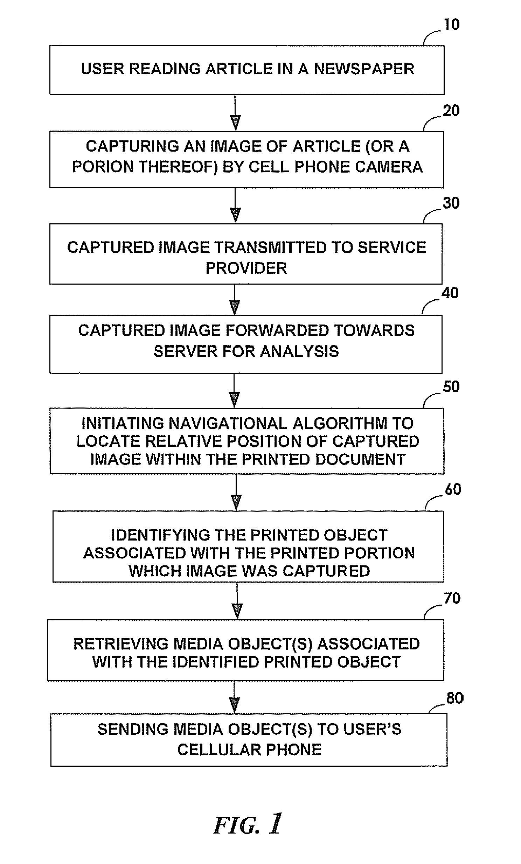

FIG. 1 - presents an example of carrying out the method according to an embodiment of the present invention.

### Detailed Description of the Invention

A better understanding of the present invention is obtained when the following non-limiting detailed description is considered in conjunction with the following figure.

The following are examples demonstrating certain ways of carrying out embodiments of the present invention, by which a cellular phone camera is used as a tool to obtain further information related to printed material, such as to an article published in a newspaper, etc.

Let us consider for example FIG. 1 in which we assume that a user reads an article in a daily newspaper (step 10), and notes that in that article there is a marked printed object (e.g. underlined) indicating that there is a media object that may be presented for that article. Now, assuming that the user is interested in retrieving that media object, all he/she has to do is to take a picture of that part of the newspaper by using his/her cellular telephone (step 20) and to transmit the captured image to a pre-defined address (e.g. a telephone number of a subscribers service provider) (step 30).

The captured image is then forwarded towards a server (step 40) for analyzing the image received. If the image comprises extractable text having high probability for recognition by applying any process known in the art per se (such as OCR) or pattern matching of an image, then a search is conducted for the unique text/image in the printed-media file of the daily newspaper.

However, typically, the image would be of low quality due to any one or more reasons such as low resolution camera, no-auto-focus, reflection, backlight, uneven-surface or any other mechanism affecting the image quality, then a navigational algorithm is initiated, where the navigational algorithm is an algorithm that allows identifying the location of the captured image within the printed document, e.g. at which page, at which part of a page, etc. is this printed object located, and/or the location within the electronic file representing that printed document, e.g. where is the electronic signal representing the printed object(s) positioned within the electronic signal representing the combination of all the printed objects (step 50). This algorithm preferably allows easy identification of a partial image within a large frame. Once the image is identified, the location of that image (e.g. even of a partial printed object) within the printed document and/or within the electronic file representing that printed document is extracted and used to identify the printed object (step 60) for which the media object has been requested (e.g. one that contains an item marked by a Hyperlink or the like). The use of both algorithms assures very high probability of identification even under harsh environmental condition. (uneven surface, lighting conditions, low camera resolution, missing auto focus, etc. The identification of the printed object is done through the use of information which links various parts (portions) of the printed document with corresponding printed object, where the links can be either direct links (e.g. portion x is linked with printed object y) or indirect (e.g. portion x is linked with portion y which in turn is linked with printed object z). In the alternative, the information may associate each portion with possible printed objects located in neighboring portions (e.g. one portion may be associated each a number of printed objects. Now, since the likelihood that the captured image will contain only that captured image is not too high, the more likely event will be that that captured image will comprise non-equal adjacent parts of neighboring portions, and based on that information it will be possible to derive which is the printed object that he user meant to capture its image.

Now, let us take for example, a case where there is one retrievable media object for a given article which the user reads, and that there is a printed object in the form of underlined headline that indicates that a media object can indeed be retrieved for that article. Since there is only one media object associated with that article, then the whole article or any part thereof may be used as a printed portion that could be linked (through the printed object which provides an indication to the user about the existence of the media object) with the media object to be retrieved. Thus, even if the reader captures a portion of that article that does not include the underlined headline or even a part of the underlined headline, still by transmitting the captured image that comprises an image of a portion of the article, the present invention allows the service provider to determine which is the article of interest based on that portion and consequently realize which is the media object that should be transmitted to the user.

Upon locating the printed object of interest, one or more media objects associated with that printed object are retrieved (step 70) and transmitted to the user (step 80) either to the same cellular phone number from which the captured image was sent, or once the user has been identified (e.g. through his/her telephone number), to any pre-defined communication address of the user's choice, such as to his/her e-mail address. Let us assume that the media object is a video clip, then, upon receipt of the requested video clip the user may play and watch it on his/her cellular phone.

The electronic file associated with the image may comprise one or more media objects relevant to that image, for example if the image comprises an article that relates to a certain soccer game, the goals scored may be presented in the media object, or the media object may comprise textual information which, if the user so chooses, provides him/her with additional information to that already appearing in the printed object. In the above example of the soccer competition, let us assume that the name of the player who scored a goal is underlined, than focusing on the part of the article which comprises this underlined name may lead to the provisioning of statics about that player, show a video clip about this player may be provided, etc. Also, the media object sent to the user may comprise a URL code which provides the user with connectivity to an Internet website from which further information concerning the marked term may be retrieved.

According to an embodiment of the present invention, the identification mark comprises location related information. In such a case, as part of identifying the printed object(s) associated with the captured image (step 60), the marked term(s) are extracted from the captured image and one or more printed objects out of the plurality of stored printed objects associated with a plurality of media objects, are then identified as the matching printed objects. Next, pre-determined electronic file(s) associated with that marked term (or with each of the matched printed objects, as the case may be), is/are retrieved (step 70) and sent to the user (step 80).

Based on the matched image identified, the corresponding electronic file(s) is/are retrieved and sent to the user. If the quality of the image is too poor, for example due to the camera quality, and/or the image is taken from a certain angle and the conditions at which the picture is taken are far from being perfect, it may be difficult to match the captured image with any of the plurality of the printed objects available, which in turn would prevent the retrieval of the required electronic file. In such a case one or more pattern recognition algorithms may be initiated to try identifying which is the electronic file that the user is interested in. A number of methods can be applied in this case. For example, the image may be screened to find out a characterization mark which can be the arrangement of the article, whether a photograph is included in the article, relative location in the newspaper page and the like. Once it is possible to identify which is the electronic file the user is interested in, the process continues as before. Alternatively, a process of characters' recognition is applied on the captured image and the characters identified are matched against the articles of the daily newspaper.

In addition, the user may wish to retrieve information which relates to marked terms in a newspaper that was published some time ago. To provide this service, the server contains a plurality of folders, each preferably associated with a different date. If the date of the newspaper can be retrieved from the captured image, the method described shall be continued when the folder of the appropriate date is approached. If no date can be retrieved from the captured image, any one of a number of options can be adopted by the service provider. One option is if no such marked term can be identified in today's newspaper, to search backward in time, until the first time a match is found that allows identifying an electronic file that is associated with the file, and then sending this media object to the user. Another option is for example to initiate an interactive process with the user and request the missing information from him/her.

It is to be understood that the above description only includes some embodiments of the invention and serves for its illustration. Numerous other ways of carrying out the methods provided by the present invention may be devised by a person skilled in the art without departing from the scope of the invention, and are thus encompassed by the present invention.

For example, it should be clear to any person skilled in the art that the functionalities required to carry out the present invention may be divided differently between the portable apparatus and the server. To name but few, the recognition of the different characters may be carried out either by the portable apparatus or in the alternative, the captured image can be sent to the server where the characters' recognition process can take place. It should be understood that any such shifting a functionality from the portable apparatus to the server and vice versa, is a matter of simple selection and can be done without departing from the scope of the present invention.

## Claims

1. A method for providing one or more media objects associated with a printed document to a user of a mobile communication device, the method comprising the steps of:
providing an electronic file comprising one or more digital representations of a printed document, wherein said printed document comprises a plurality of printed portions and plurality of printed objects associated with at least some of said printed portions;
providing data related to a direct and/or indirect association of said plurality of printed portions with respective printed objects out of said plurality of printed objects;
associating a plurality of media objects with the plurality of printed objects;
receiving a captured image representing at least one part of a printed portion, wherein said printed portion belongs to the plurality of printed portions;
processing the captured image;
identifying one or more printed portions whose image has been captured, and deriving therefrom respective one or more printed objects associated therewith;
communicating at least one media object associated with said identified one or more printed objects to the user of the mobile communication device.

2. A method according to claim 1, wherein the step of identifying the one or more printed portions, is based on any one or more members of the group consisting of: features matching between the captured image and the printed document, size of the one or more printed object, proximity to other printed objects, relationship between printed objects, presence of an image within a printed object, size of the image within the printed object, relative size and/or location of an image within the printed object, title and relationship between title and the remaining of the printed object, colors, relationship between colors and color combination of printed objects.

3. A method according to claim 1, wherein said printed object which image has been captured, comprises at least one identification mark to enable easier identification of the one or more printed objects associated with said captured image.

4. A method according to claim 1, wherein said one or more media objects are communicated to the user of the mobile communication device by using a communication address associated with said user.

5. A method according to claim 1, wherein the step of identifying the one or more printed objects further comprises identifying a folder associated with said printed document from among database comprising a plurality of folders each associated with at least one printed document.

6. An apparatus for providing one or more media objects associated with a printed document to a user of a mobile communication device which comprises:
- storage means for storing:
o at least one electronic file comprising one or more digital representations of a printed document, wherein the printed document comprises a plurality of printed portions and plurality of printed objects associated with at least some of said printed portions;
o information related to direct and/or indirect association of each of the plurality of portions comprised in the printed document, with respective printed objects of the plurality of printed objects; and
o a plurality of media objects associated with said plurality of printed objects;
- a receiver configured to receive an electronic image, captured by using an image capturing device, wherein the captured image represents at least one part of a portion of the printed document, wherein that portion belongs to the plurality of printed portions comprised in the printed document;
- a processor adapted to operate on the image received and to identify one or more portions of the plurality of printed portions whose image has been captured at least partially, and to derive therefrom one or more printed objects associated with the identified one or more printed portions; and
- communication means adapted to forward one or more media objects associated with the identified one or more printed objects towards a mobile communication device associated with the user.

7. An apparatus according to claim 6, wherein said processor is further adapted to determine based on the processed image, which part of the one or more digital representation of the printed document is included in the captured image and to identify one or more printed objects out of said plurality printed objects, as ones that are associated with said part of the one or more digital representations.

8. An apparatus according to claim 6, wherein said storage means is further operative to store a plurality of electronic folders each representing at least one printed document and each of said folders comprises a plurality of media objects associated with a pre-defined plurality of printed objects associated with a corresponding printed document.

9. A mobile communication device adapted to enable providing to a user of said mobile communication device at least one media object associated with a printed document, wherein said mobile communication device comprises:
- an image-capturing means for capturing an image of at least one part of a portion of that printed document associated with at least one printed object;
- a processor adapted to operate on the captured image and to provide one or more characterization parameters of the printed object whose at least one part has been captured by said image capturing means;
- transmission means adapted to transmit information associated with said one or more characterization parameters towards a communication network; and
- reception means adapted to receive one or more media objects associated with said at least one part of the printed object, and wherein said one or more media objects are forwarded to said mobile communication device along a communication network.
